# EUROPÄISCHE PATENTSCHRIFT

(11) **EP 0 340 700 B1**
(45) Veröffentlichungstag und Bekanntmachung des Hinweises auf die Patenterteilung: **07.01.1993**
(21) Anmeldenummer: 89107858.6
(22) Anmeldetag: 29.04.1989
(51) Int. Cl.: H02B 1/26

(54) **Gehäuse für Reihenschaltgerät**
Casing for a series-switching apparatus
Boîtier pour appareils de commutation en série

(30) Priorität: 06.05.1988 DE 3815483
(43) Veröffentlichungstag der Anmeldung: 08.11.1989
(73) Patentinhaber: Asea Brown Boveri Aktiengesellschaft, 68309 Mannheim (DE)
(72) Erfinder: Goehle, Rolf, D-6906 Leimen (DE); Schmitt, Volker, D-6901 Bammental (DE)
(74) Vertreter: Rupprecht, Klaus, Dipl.-Ing.

(56) Entgegenhaltungen:
- EP-A- 0 253 120
- FR-A- 1 212 439
- GB-A- 2 016 632
- US-A- 3 496 521

## Beschreibung

Die Erfindung betrifft ein Gehäuse nach dem Oberbegriff des Anspruches 1.

Der Einsatz von aneinanderreihbaren elektrischen Schaltgeräten ist im allgemeinen dann vorgesehen, wenn eine übersichtliche Anordnung der Schaltgeräte gewünscht ist, um auf diese Weise eine sichere Schaltbetätigung und Überwachung der Schalthandlungen sicherzustellen. Insbesondere gilt dies für elektrische Selbstschalter, welche als Leitungsschutzschalter, Fehlerstromschutzschalter oder Motorschutzschalter zum Einsatz kommen, wobei sie in Zählerplätzen oder Schaltkästen nebeneinander angeordnet sind.

Verschiedentlich werden derartige elektrische Schaltgeräte auch miteinander kombiniert, beispielsweise als dreipoliger Schalter für die Absicherung eines Dreiphasennetzes oder als Fehlerstrom-Leitungs-Schutzschalter.

Ein derartiger Schalter ist beispielsweise aus der DE 33 74 487 C bekannt geworden in welcher an einen Leitungsschutzschalter ein entsprechender Fehlerstromschutzschalter, der ebenfalls in einem Modulgehäuse untergebracht ist, angebaut ist. Die Gehäuse für beide Schalterteile sind miteinander verbunden. Aus Montagegründen ist es zweckmäßig, wenn die Gehäuse jeweils mit Zentrierhilfen versehen sind, welche ein Verrutschen gegeneinander verhindern. Darüber hinaus erweist sich auch bei elektrischen Schaltgeräten, z. B. Profiltragschienen, die am Installationsort ausgerichtet werden sollen, die Ausstattung mit Zentriereinrichtungen als vorteilhaft, da so auf einfache Weise eine übersichtliche Anordnung der Schaltgeräte gewährleistet ist.

Andererseits kann eine solche vorhandene Zentriereinrichtung sich störend auswirken, wenn Schaltgeräte unterschiedlicher Bauart, z. B. mit nicht kompatibler Zentriereinrichtung, aneinandergereiht werden sollen, da hierdurch seitlicher Versatz oder Höhenversatz die Folge sind und zudem ein erhöhter Platzbedarf resultieren kann.

Eine Zentriereinrichtung für Reihenklemmen ist aus der FR-A 1 212 439 bekannt geworden. Die Zentriereinrichtung besteht aus beidseitig das Gehäuse der Reihenklemme überragenden Zapfen, die jeweils in die Muffe des benachbarten Gehäuses eingefügt werden können.

Aus der GB-A 2 016 632 ist eine Zentriereinrichtung für aneinanderreihbare Leitungsschutzschalter bekannt geworden, die einen Zapfen mit federnden Armen aufweist, der in eine Muffe einrastbar ist, wobei ein Kopf mit vergrößertem Durchmesser teilweise aus dem Gehäuse herausragt. Dieser Kopf mit vergrößertem Durchmesser wird dann von einer Ausnehmung am nächsten Gehäuse umfaßt, und die Verbindung der beiden Gehäuse miteinander erfolgt mittels einer Schraube, die in den Zapfen mit den federnden Armen eingeschraubt wird. Der Kopf sowie die korrespondierende Öffnung sind profiliert, um beim Einschrauben der Schraube ein Verdrehen des Zapfens zu verhindern.

Die letztere Anordnung ist recht kompliziert im Aufbau.

Aufgabe der Erfindung ist es, ein Gehäuse der eingangs genannten Art zu schaffen, welches eine problemlose Zentrierung mit benachbarten Schaltgeräten gestattet, ohne daß ein über das Gehäuse hinausragender Zentrierzapfen den Transport des Gerätes stört. Insbesondere soll auf kostengünstige Herstellung und einfache Handhabung der Zentriereinrichtung geachtet werden.

Diese Aufgabe wird erfindungsgemäß gelöst durch die kennzeichnenden Merkmale des Anspruches 1.

Dabei ist in vorteilhafter Ausgestaltung der Erfindung vorgesehen, daß die Muffen auf einer Flachseite und die Zapfen auf der gegenüberliegenden Flachseite des Gehäuses an jeweils mit den Muffen korrespondierenden Stellen angeordnet sind. Dabei ist es zweckmäßig, die Muffen in die Gehäusewand einzuformen und die Zapfen an der gegenüberliegenden Gehäusewand einstückig mit dieser verbunden anzuschließen.

Eine besondere Ausgestaltung der Erfindung sieht vor, daß die Zapfen an mehreren über ihren Umfang gleichmäßig verteilten Stellen mit der Gehäusewand verbunden sind und dabei jeweils eine darunter befindliche, in die Gehäusewand eingeformte Muffe überdecken.

Die solcherart vorgesehenen Zapfen werden einstückig mit der zugehörigen Gehäusewand vorzugsweise im Spritzgußverfahren aus spritzfähigem Isoliermaterial hergestellt.

Um die Zapfen, die mit den Muffen kompatibel sind, d. h., daß deren Abmessungen so aufeinander abgestimmt sind, daß die Zapfen in die Muffen einschiebbar sind, versenken zu können, sind die Verbindungen der Zapfen mit der Gehäusewand so dimensioniert, daß sie einerseits die bei der Zentrierung auftretenden Schubkräfte auffangen und andererseits ohne Beschädigung der Gehäusewand von dieser abbrechbar sind. Die abgebrochenen Zapfen können anschließend in die zuvor verdeckten Muffen in der Gehäusewand eingeführt werden, so daß sie deren Zugangsöffnung bündig abschließen.

Gemäß einer zweckmäßigen Ausgestaltung der Erfindung sind die Verbindungen der Zapfen mit der Gehäusewand an wenigstens zwei zueinander versetzten Stellen am Umfang angeordnet und mit.dem Rand der von dem Zapfen verdeckten Muffe verbunden. Mittels Drehung oder durch Drücken in axialer Richtung des Zapfens gegen den Widerstand der Verbindungen können diese gebrochen werden.

Je nach Einsatzzweck können auch in diesem Fall die Zapfen in den zuvor von ihr verdeckten Muffen versenkt werden oder bei Bedarf wieder herausgedrückt werden. Hierfür ist das Gehäuse mit die gesamte Gehäusedicke durchgreifenden Muffen versehen, so daß ein Herausdrücken der versenkten Zapfen ohne Zerlegung des Gehäuses möglich ist.

Gemäß einer weiteren vorteilhaften Ausgestaltung der Erfindung ist vorgesehen, daß die Zapfen mit einem Außengewinde und die von ihr verdeckten Muffen mit einem hierzu kompatiblen Innengewinde versehen sind, so daß die Zapfen je nach Bedarf in die Muffen einschraubbar oder herausschraubbar sind, Dabei ist ferner vorgesehen, daß die in die den Zapfen gegenüberliegenden Gehäusewand eingeformten Muffen einen Durchmesser aufweisen, der das Einschieben der mit Außengewinde versehenen Zapfen in die Muffe ohne Schraubbewegung gestattet.

Gemäß der Erfindung können die Zapfen sowie die hierzu kompatiblen Muffen grundsätzlich jede Querschnittsform aufweisen, mit Ausnahme der mit Gewinde versehenen Zapfen und Muffen, welche zylindrischen Querschnitt haben.

Diese und weitere vorteilhafte Ausgestaltungen sind in den Patentansprüchen genannt.

Anhand eines in der Zeichnung dargestellten Ausführungsbeispieles sollen die Erfindung, vorteilhafte Ausgestaltungen und besondere Vorteile der-Erfindung näher erläutert und beschrieben werden.

Es zeigen
- Figur 1: Seitenansicht eines Schaltgerätegehäuses mit einer als Zapfen-Muffen-Kombination ausgestalteten Zentriereinrichtung
- Figur 2: Seitenansicht der in Figur 1 gezeigten Anordnung mit Teilschnitt der Muffen
- Figur 3: Teilansicht der Schmalseite eines Schaltgerätegehäuses mit versenktem Zapfen
- Figur 4: Teilansichten der Schmalseiten zweier aneinander gereihter Schaltgerätegehäuse mit ineinandergreifender Zentriereinrichtung.

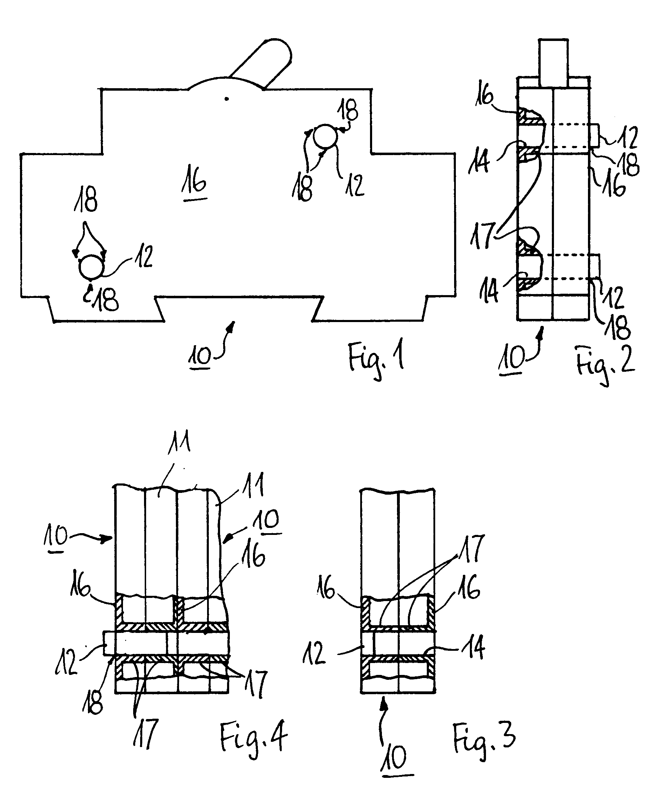

In Figur 1 ist die Seitenansicht eines Gehäuses 10 für ein aneinanderreihbares Schaltgerät in Schmalbauweise dargestellt, welches auf seiner Flachseite ein seine Gehäusewand 16 anschließende Zapfen 12 aufweist. Die Lage der Zapfen 12 korrespondiert mit Muffen 14, wie in Figur 2 ersichtlich, auf der gegenüberliegenden Flachseite in die Gehäusewand 16 eingeformt sind.

Die Zapfen 12 besitzen an ihrem Umfang, wie in Figur 1 angedeutet, jeweils drei um 120 Grad zueinander versetzte Verbindungen 18, durch welche die Zapfen 12 einstükkig mit der Gehäusewand 16 verbunden sind. Diese Verbindungen 18 werden gemeinsam mit der Gehäusewand 16 und den Zapfen 12 hergestellt.

Die weitere Ausgestaltung des Gehäuses 10, das in Figur 1 nur in seinen groben Konturen gezeigt ist, entspricht den aus dem Stand der Technik bekannten Schaltgerätegehäusen.

In Figur 2 ist die Schmalseite des in Figur 1 dargestellten Gehäuses 10 wiedergegeben, wobei in einem Teilschnitt jeweils die Ausgestaltung der Muffen 14 gezeigt ist, welche in die Gehäusewand 16 eingeformt sind und wie in Figur 2, angedeutet eine durch die gesamte Gehäusedicke des aus zwei Gehäuseschalen 11 gebildeten Gehäuses 10 geführt ist. Aus Steifigkeitsgründen ist hierbei die Einformung der Muffen 14 in die Gehäusewand 16 durch eine zylindrische Anformung 17 verstärkt, welche an die Innenseite der Gehäusewand 16 anschließt. Während also die Muffe 14 jeweils das Gehäuse 10 von einer Flachseite aus als zylißdrischer Kanal durchgreift, ist auf der gegenüberliegenden Flachseite an die Gehäusewand 16 ein außen angesetzter Zapfen 12 vorgesehen, der, wie bereits erwähnt, mittels der Verbindungen 18 an der Gehäusewand anschließt und hierbei die darunter liegende Öffnung der Muffe 14 verdeckt.

Wie in Figur 3 gezeigt ist, kann der Zapfen 12 aber auch in die Muffe 14 eingeschoben werden, wenn seine Verbindungen 18 mit der Gehäusewand 16 entfernt sind. Dieses kann beispielsweise durch leichtes Drehen um seine Längsachse oder durch Druck in Richtung seiner Längsachse erfolgen. Figur 3 zeigt nun die Teilansicht der Schmalseite eines Schaltgerätes gemäß Figur 1, in welchem die durch das Gehäuse 10 geführte Muffe 14, die in die Gehäusewand 16 eingeformt und von den zylindrischen Anformungen 17 umgeben ist, im Teilschnitt dargestellt. Der Zapfen 12 ist hierbei in die Muffe eingeschoben und schließt bündig mit der Außenseite der Gehäusewand 16 ab.

In Figur 4 sind die Schmalseiten von aneinandergereihten Gehäusen 10 für Schaltgeräte gemäß Figur 1 wiedergegeben, wobei die Anordnung und Ausgestaltung der Muffen 14 und der darin eingeführten Zapfen 12 im Teilschnitt gezeigt sind. Hieraus ist ersichtlich, daß die Zapfen 12 an einer Stirnseite, wie bereits in den Figuren 1 bzw. 2 erläutert, mittels Verbindungen 18 mit der Gehäusewand 16 des zugehörigen Gehäuses 10 fest verbunden sind und mit den die Flachseite überragenden. Ende in die Muffe 14 der benachbarten Gehäuseschale 11 eingreifen. Hierdurch ist eine sichere Zentrierung der aneinandergereihten Gehäuse 10 gewährleistet und ein seitlicher Versatz ausgeschlossen.

Die Zapfen 12 bzw. die Muffen 14 werden gemäß der Erfindung vorzugsweise zylindrisch gestaltet. Im Hinblick auf montagefreundliche Handhabung sowie ausreichende Stabilität ist der Durchmesser der Zapfen auf 3 bis 4 Millimeter festgelegt. Die Länge der Zapfen kann abhängig vom verwendeten Material, welches vorzugsweise ein thermoplastischer Kunststoff ist, ebenfalls auf 3 bis 4 Millimeter festgelegt sein, aber auch größere Längen, z. B. entsprechend dem halben Modulmaß, sind möglich, sofern die Muffentiefe dies zuläßt.

Die vorgenannte Dimensionierung der Zapfen 12 und der Muffen 14 hängt zusammen mit dem bevorzugt eingesetzten Spritzgießverfahren, welches bei den angegebenen Abmessungen die einstückige Herstellung einer Gehäuseschale 11 mitsamt den eingeformten Muffen 14 und den außen über die Verbindungen 18 anschließenden Zapfen 12 ermöglicht.

Eine gänzlich andere Ausgestaltung der Erfindung kann darin bestehen, daß anstelle von angeformten Zapfen 12 geringer Länge solche Zapfen zur Anwendung gelangen, welche separat gefertigt, beispielsweise als Stangenmaterial, das auf die Länge der Gehäusebreite entsprechend dem Modulmaß von 17, 5 Millimetern abgelängt ist, und jeweils den gesamten durch die Muffe 14 gebildeten Hohlraum im Gehäuse 10 ausfüllt. Dabei kann je nach Bedarf zu Zentrierzwecken der so gestaltete Zapfen um das vorgesehene Maß auf einer Seite des Gehäuses 10 herausgedrückt werden, damit es in die korrespondierende Muffe der Gehäuseschale 11 des benachbarten Gehäuses 10 eingreift.

Während also bekannte mehrpolige Schaltgeräte mittels Halteklammern verbunden werden und mittels in Ausnehmungen in den Gehäuseteilen eingelegter Hülsen zentriert werden ist mit der zuvor beschriebenen Erfindung der hierdurch verursachte Montageaufwand deutlich verringert. Dies wird dadurch erreicht, daß in das Gehäuse 10 Muffen 14 eingeformt werden, die von einer Seite stets zugänglich sind, hingegen auf der anderen Seite durch angeformte und mittels dünner Verbindungen 18 mit der Gehäusewand 16 verbundener Zapfen 12 verdeckt sind. Bei Verwendung als einpoliger Schaltermodul kann der überstehende Zapfen 12 abgebrochen und in die darunter befindliche in aie Gehäusewand 16 eingeformte Muffe 14 eingeführt werden, so daß sie bündig mit der Außenfläche der Gehäusewand 16 abschließt. Ist eine mehrpolige Ausführung des Schaltgeräts gewünscht, so greift der überstehende Zapfen 12 in die Muffe 14 des benachbarten Schaltgerätegehäuses 10 und ermöglicht so eine sichere Zentrierung.

Die Erfindung ermöglicht sowohl eine kostengünstige Herstellung mittels Spritzgießverfahren, bei der die Gehäuseschalen 11 mitsamt den Muffen 14 und den Zapfen 12 einstückig herstellbar sind, als auch dementsprechend kostengünstige Lagerhaltung und Montage. Darüber hinaus gewährleistet sie eine vielseitige Verwendbarkeit, da zur Umrüstung von beispielsweise einpoligen Schaltgeräten auf mehrpolige Schaltgeräte die in die Gehäusewand 16 eingeschobenen Zapfen 12 nur herausgedrückt werden müssen, um als Zentriernocken zu dienen.

## Patentansprüche

1. Gehäuse (10) für aneinanderreihbare elektrische Schaltgeräte, insbesondere Selbstschalter in Schmalbauweise, vorzugsweise bestehen aus zwei Flachschalen, wobei die Außenwände (16) des Gehäuses (10) mit formschlüssige Zentriereinrichtungen bildenden Zapfen und Muffen versehen sind, dadurch gekennzeichnet, daß die Zapfen (12) zur Zentrierung reversibel in die Muffen (14) am Gehäuse (10) versenkbar sind, um den wahlweisen Einsatz mit und ohne Zentriereinrichtung zu ermöglichen.

2. Gehäuse nach Anspruch 1, dadurch gekennzeichnet, daß die Muffen (14) auf einer Flachseite und die mit den Muffen kompatiblen Zapfen (12) auf der gegenüberliegenden Flachseite des Gehäuses (10) an den mit den Muffen (14) korrespondierenden Stellen angeordnet sind.

3. Gehäuse nach Anspruch 1 oder 2, dadurch gekennzeichnet, daß die Muffen (14) in die Gehäusewand (16) einer Flachschale (11) eingeformt sind und die Zapfen (12) an die Gehäusewand (16) der gegenüberliegenden anderen Flachschale einstückig mit dieser verbunden anschließen.

4. Gehäuse nach Anspruch 3, dadurch gekennzeichnet, daß die Zapfen (12) an mehreren über ihren Umfang gleichmäßig verteilt angeordneten Verbindungen (18) mit der Gehäusewand (16) verbunden sind.

5. Gehäuse nach Anspruch 4, dadurch gekennzeichnet, daß jeder Zapfen (12) eine in die Gehäusewand (16) eingeformte Muffe (14) überdeckt und daß ihre Querschnitte kongruent sind.

6. Gehäuse nach einem der vorherigen Ansprüche, dadurch gekennzeichnet, daß die Zapfen (12) von der Gehäusewand (16) ohne deren Beschädigung abbrechbar sind und in die freigelegte Muffe (14) einführbar sind, wobei sie bündig mit der Außenseite der Gehäusewand (16) abschließen.

7. Gehäuse nach einem der vorherigen Ansprüche, dadurch gekennzeichnet, daß die Verbindungen (18) welche die Zapfen (12) mit der Gehäusewand (16) verbinden, jeweils an zwei oder mehr zueinander versetzten Stellen am Umfang des Zapfens (12) mit dem Rand der jeweils verdeckten Muffe (14) verbunden sind und mittels Drehung um ihre Längsachse oder mittels Drücken in Richtung der Längsachse von der Gehäusewand (16) abbrechbar sind.

8. Gehäuse nach einem der Ansprüche 1 oder 2, dadurch gekennzeichnet, daß die Zapfen ein Außengewinde aufweisen und in die von ihnen verdeckte Muffe (14) einschraubbar oder wahlweise herausschraubbar sind und daß die korrespondierende, in die Gehäusewand (16) der benachbarten Halbschale (11) des aneinandergereihten Gehäuses (10) eingeformte Muffe (14) einen Querschnitt aufweist, der das Einschieben des mit Gewinde versehenen Zapfens (12) gestattet.

9. Gehäuse nach einem der Ansprüche 1 bis 7, dadurch gekennzeichnet, daß die in die Gehäusewand (16) eingeformten Muffen (14) im Inneren der Gehäuse (10) von einer Führung (17) umgeben sind, welche an die Gehäusewand (16) anschließt und so einen die gesamte Gehäusedicke durchgreifenden Kanal bildet.

10. Gehäuse nach Anspruch 10, dadurch gekennzeichnet, daß als Zapfen (12) ein Stift dient, dessen Länge der Gehäusedicke entspricht.

## Claims

1. Housing (10) for electrical switching devices that can be connected in series, in particular narrow-design automatic circuit-breakers, preferably consisting of two flat shells, the outer walls (16) of the housing (10) being provided with pins and bushings forming positive centering means, characterised in that the pins (12) for centering can be sunk reversibly into the bushings (14) on the housing (10) to permit the optional use with and without centering means.

2. Housing according to Claim 1, characterised in that the bushings (14) are arranged on one flat side and the pins (12) compatible with the bushings are arranged on the opposite flat side of the housing (10) at the points corresponding to the bushings (14).

3. Housing according to Claim 1 or 2, characterised in that the bushings (14) are formed into the housing wall (16) of a flat shell (11) and the pins (12) adjoin, joined integrally thereto, the housing wall (16) of the opposite other flat shell.

4. Housing according to Claim 3, characterised in that the pins (12) are joined to the housing wall (16) at a plurality of connections (18) arranged so as to be evenly distributed over their circumference.

5. Housing according to Claim 4, characterised in that each pin (12) covers a bushing (14) formed into the housing wall (16), and in that their cross-sections are congruent.

6. Housing according to one of the preceding claims, characterised in that the pins (12) can be broken off from the housing wall (16) without being damaged and can be inserted into the exposed bushing (14), in which case they terminate flush with the outer side of the housing wall (16).

7. Housing according to one of the preceding claims, characterised in that the connections (18) which join the pins (12) to the housing wall (16) are joined in each case at two or more mutually offset points on the circumference of the pin (12) to the edge of the respective covered bushing (14) and can be broken off from the housing wall (16) by means of rotation about their longitudinal axis or by means of pressure in the direction of the longitudinal axis.

8. Housing according to one of Claims 1 or 2, characterised in that the pins have an external thread and can be optionally screwed into or screwed out of the bushing (14) that they cover, and in that the corresponding bushing (14) into the housing wall (16) of the neighbouring half-shell (11) of the housing (10) connected in series has a cross-section that permits the insertion of the pin (12) provided with a thread.

9. Housing according to one of Claims 1 to 7, characterised in that the bushings (14) formed into the housing wall (16) are surrounded in the interior of the housing (10) by a guide (17) which adjoins the housing wall (16) and thus forms a channel penetrating the entire thickness of the housing.

10. Housing according to Claim 10, characterised in that a peg whose length corresponds to the thickness of the housing is used as pin (12).

## Revendications

1. Boîtier pour appareils de commutation pouvant être disposés en rang, côte-à-côte, notamment pour interrupteurs automatiques de forme étroite, constitué de préférence de deux coquilles plates, ce boîtier (10) ayant ses parois extérieures (16) munies de broches et parties femelles constituant des dispositifs de centrage avec liaison par conjugaison de formes, caractérisé par le fait que, pour le centrage, les broches (12) peuvent être engagées de manière réversible dans les parties femelles (14) du boîtier (10), afin de permettre une utilisation sélective avec et sans dispositif de centrage.

2. Boîtier selon revendication 1, caractérisé par le fait que les parties femelles (14) sont situées sur un côté plat et les broches (12) compatibles avec elles sont disposées sur le côté plat opposé du boîtier, en des endroits correspondants aux parties femelles (14).

3. Boîtier selon revendication 1 ou 2, caractérisé par le fait que les parties femelles (14) sont formées dans la paroi (16) d'une coquille plate (11) et les broches (12) sont solidaires de la paroi (16) de l'autre coquille, située en vis-à-vis, avec laquelle elles sont d'un seul tenant.

4. Boîtier selon revendication 3, caractérisé par le fait que les broches (12) sont reliées à la paroi (16) du boîtier par plusieurs éléments de liaison (18) régulièrement répartis sur leur pourtour.

5. Boîtier selon revendication 4, caractérisé par le fait que chaque broche (12) recouvre une partie femelle (14) formée dans la paroi (16) du boîtier et par le fait que leurs sections droites sont concordantes.

6. Boîtier selon l'une des revendications précédentes, caractérisé par le fait que les broches (12) peuvent être détachées de la paroi (16) du boîtier par rupture sans endommager celle-ci et être introduites dans la partie femelle dégagée (14), ces broches affleurant la surface extérieure de la paroi (16) du boîtier.

7. Boîtier selon l'une des revendications précédentes, caractérisé par le fait qu'en un ou plusieurs endroits décalés sur le pourtour des broches, les éléments de liaison (18) reliant les broches (12) à la paroi (16) du boîtier sont reliés au bord de la partie femelle recouverte concernée (14) et peuvent être séparés de la paroi (16) du boîtier par rupture obtenue par rotation des broches autour de leur axe longitudinal ou par pression dans la direction de l'axe longitudonal.

8. Boîtier selon revendication 1 ou 2, caractérisé par le fait que les broches présentent un filetage extérieur et peuvent être vissées dans la partie femelle (14) qu'elles masquent ou, au choix, peuvent en être dévissées, et par le fait que chaque partie femelle correspondante, dans la paroi (16) de la demi-coquille voisine (11) que comporte le boîtier accolé (10), présente une section droite permettant l'introduction de la broche (12) munie du filetage.

9. Boîtier selon l'une des revendications 1 à 7, caractérisé par le fait que les parties femelles (14) formées dans la paroi (16) du boîtier (10) sont entourées par un guide (17) qui se raccorde à la paroi (16) et forme ainsi un canal traversant toute l'épaisseur du boîtier.

10. Boîtier selon revendication 10, caractérisé par le fait qu'une tige ou cheville dont la longueur correspond à l'épaisseur du boîtier sert de broche (12).
